# EUROPEAN PATENT APPLICATION

(11) **EP 3 696 890 A1**
(43) Date of publication of application: **19.08.2020**
(21) Application number: 20157122.1
(22) Date of filing: 13.02.2020
(51) Int. Cl.: H01M 4/13, H01M 4/62, H01M 10/052, H01M 10/0565, H01M 4/36, H01M 4/02

(54) **REDUCED LLTO PARTICLES WITH ELECTRONICALLY INSULATING COATINGS**

(30) Priority: 13.02.2019 US 201916275300
(71) Applicant: Robert Bosch Battery Systems LLC, Orion, Michigan 48359 (US)
(72) Inventor: HARRY, Katherine Joann, Oakland, CA 94610 (US); EITOUNI, Hany Basam, Oakland, CA 94618 (US)
(74) Representative: Isarpatent

(57) **Abstract**

Core/shell ionically-conductive particles are disclosed. The core particles contain reduced titanium-based or zirconium-based electrolyte materials, and the shells are electronically-insulating. The core/shell particles can be combined with organic electrolytes to form composite organic-ceramic electrolytes that can be used in lithium battery cells. Such composite organic-ceramic electrolytes have been found to have improved lithium transport properties when compared to similar composite electrolytes made with oxidized titanium-based (Ti⁴⁺) or zirconium-based (Zn⁴⁺) electrolytes.

## Description

### BACKGROUND OF THE INVENTION

### Field of the Invention

This invention relates generally to electrolytes, and, more specifically, to composite organic-ceramic electrolytes.

Single ion conducting ceramic electrolytes are of interest to the battery community because they have a high ionic conductivity and a Li⁺ transference number of one. This yields quick and efficient charge transport throughout the cell without the formation of concentration gradients. However, ceramics are brittle and tend to crack easily under the stresses of cell charge and discharge. Therefore, there is interest in developing composite organic-ceramic electrolytes that combine the outstanding transport properties of ceramic electrolytes with the processability of polymer or other organic electrolytes. Unfortunately, there is a large resistance to charge transport, as high as thousands of ohm cm², across the interface between organic electrolytes and ceramic electrolytes. With such high interfacial resistances, the ceramic electrolyte in a composite material does not make significant contributions to the transport of ions through the material but behaves more like an inert filler.

It would be useful to find a way to combine ceramic and organic electrolyte materials to produce composite organic-ceramic electrolytes that have low resistance to charge transport across the interfaces between these materials.

### BRIEF DESCRIPTION OF THE DRAWINGS

The foregoing aspects and others will be readily appreciated by the skilled artisan from the following description of illustrative embodiments when read in conjunction with the accompanying drawings.
Figure 1 is a schematic cross-section drawing of a core/shell reduced titanium-based or zirconium-based ceramic electrolyte particle, according to an embodiment of the invention.
Figure 2 is a schematic cross-section drawing of a composite organic-ceramic electrolyte, according to an embodiment of the invention.
Figure 3 is a schematic cross-section drawing of a battery cell, according to an embodiment of the invention.
Figure 4 is a schematic cross-section drawing of a battery cell, according to an embodiment of the invention.
Figure 5 is a schematic cross-section drawing of a battery cell, according to an embodiment of the invention.
Figure 6 is a schematic cross-section drawing of a battery cell, according to an embodiment of the invention.
Figure 7 is Nyquist plot that shows AC impedance spectra for two lithium symmetric cells, according to an embodiment of the invention.

### SUMMARY

A composite organic-ceramic electrolyte is disclosed. In some embodiments of the invention, the composite organic-ceramic electrolyte includes an organic electrolyte and core/shell particles dispersed throughout the organic electrolyte. The core/shell particles include a core particle comprising an ionically-conductive reduced titanium-based or zirconium-based ceramic electrolyte material and an electronically-insulating outer shell around the core particle. The electronically-insulating outer shell may have an electronic conductivity less than 1 x 10-6 S/cm at 30°C. The titanium-based ceramic electrolyte may be in a reduced state Ti³⁺, and the zirconium-based ceramic electrolyte may be in a reduced state Zn³⁺.

In some arrangements, the ionic conductivity of the reduced titanium-based or zirconium-based ceramic electrolyte is greater than the ionic conductivity of the organic electrolyte.

The reduced titanium-based or zirconium-based ceramic electrolyte may be any of reduced lithium lanthanum titanates (LLTO), reduced lithium lanthanum zirconium oxides (LLZO), reduced lithium aluminum titanium phosphates (LATP), reduced lithium aluminum titanium silicon phosphates (LATSP), or combinations thereof. The organic electrolyte may be any of solid polymer electrolytes, gel electrolytes, or liquid electrolytes.

In some arrangements, a solid polymer electrolyte in the composite organic-ceramic electrolyte includes an electrolyte salt and a polymer such as polyethers, polyamines, polyimides, polyamides, poly alkyl carbonates, polynitriles, perfluoro polyethers, polysiloxanes, polyalkoxysiloxanes, polyphosphazines, polyolefins, polydienes, polyesters, fluorocarbon polymers substituted with one or more groups selected from the group consisting of nitriles, carbonates, and sulfones, or combinations thereof. The solid electrolyte may have a molecular weight greater than 250 Da.

In some arrangements, a liquid electrolyte in the composite organic-ceramic electrolyte includes an electrolyte salt and a liquid such as polyethylene glycol dimethyl ether, diethyl carbonate, ethylene carbonate, propylene carbonate, dimethylformamide, dimethylcarbonate, acetonitrile, succinonitrile, glutaronitrile, adiponitrile, alkyl substituted pyridinium-based ionic liquids, alkyl substituted pryrolidinium-based ionic liquids, alkyl substituted ammonium-based ionic liquids, alkyl substituted piperidinium-based ionic liquids, or combinations thereof.

In some arrangements, the core/shell particles are approximately spherical and have average diameters between 10 nm and 100 µm.

In some arrangements, the electronically-insulating outer shell is an electronically-insulating polymer or an electronically-insulating ceramic.

The composite organic-ceramic electrolyte of Claim 1 wherein the electronically-insulating outer shell comprises an electronically-insulating polymer selected from the group consisting of poly(pentyl malonate), poly(ethylene glycol), polycaprolactone, and combinations thereof.

The composite organic-ceramic electrolyte of Claim 1 wherein the electronically-insulating outer shell comprises an electronically-insulating ceramic selected from the group consisting of silicon oxides, titanium oxides, aluminum oxides, and combinations thereof.

In some embodiments of the invention, a composite organic-ceramic electrolyte, includes an organic electrolyte and core/shell particles dispersed throughout the organic electrolyte, wherein the core/shell particles comprise a reduced (Li⁺³) lithium lanthanum titanate core; and a poly(pentyl malonate) shell around the core.

In some embodiments of the invention, a cathode includes cathode active material particles, an electronically-conductive additive, a catholyte, and an optional binder material, and a current collector adjacent to an outside surface of the cathode. The catholyte may be any of the composite organic-ceramic electrolytes disclosed herein. The cathode active material particles may be any of lithium iron phosphate, lithium manganese phosphate, lithium cobalt phosphate, lithium nickel phosphate, lithium nickel cobalt aluminum oxide, lithium nickel cobalt manganese oxide, high-energy lithium nickel cobalt manganese oxide, lithium manganese spinel, lithium manganese nickel spinel, sulfur, vanadium pentoxide, or combinations thereof.

In some embodiments of the invention, an electrochemical cell includes an anode configured to absorb and release lithium ions; a cathode comprising cathode active material particles, an electronically-conductive additive, a catholyte, and an optional binder material; a current collector adjacent to an outside surface of the cathode; and a separator region between the anode and the cathode, the separator region comprising a separator electrolyte configured to facilitate movement of lithium ions back and forth between the anode and the cathode. The catholyte may be any of the composite organic-ceramic electrolytes disclosed herein. The anode may include any of graphite, silicon or lithium titanate, and the separator electrolyte may include any of the composite organic-ceramic electrolytes disclosed herein.

In some arrangements, the anode may be lithium or lithium alloy foil, the separator electrolyte may be any of the composite organic-ceramic electrolytes disclosed herein, and there may also be an overcoat layer adjacent to the anode, wherein the overcoat layer comprises an electrolyte that contains no core/shell titanate electrolyte particles. The separator electrolyte may include any of the composite organic-ceramic electrolytes disclosed herein.

In some arrangements, within an electrochemical cell, the catholyte and the separator electrolyte are the same.

### DETAILED DESCRIPTION

The embodiments of the invention are illustrated in the context of composite organic-ceramic electrolytes for lithium battery cells.

All publications referred to herein are incorporated by reference in their entirety for all purposes as if fully set forth herein.

All ranges disclosed herein are meant to include all ranges subsumed therein unless specifically stated otherwise. As used herein, "any range subsumed therein" means any range that is within the stated range.

In this disclosure, the terms "negative electrode" and "anode" are both used to mean "negative electrode". Likewise, the terms "positive electrode" and "cathode" are both used to mean "positive electrode".

It is to be understood that the terms "lithium metal" or "lithium foil," as used herein with respect to negative electrodes, are meant to include both pure lithium metal and lithium-rich metal alloys as are known in the art. Examples of lithium rich metal alloys suitable for use as anodes include Li-Al, Li-Si, Li-Sn, Li-Hg, Li-Zn, Li-Pb, Li-C, Li-Mg or any other Li-metal alloy suitable for use in lithium metal batteries. Other negative electrode materials that can be used in the embodiments of the invention include materials in which lithium can intercalate, such as graphite.

The term "organic electrolyte" is used throughout this disclosure. It should be understood that such organic electrolytes include organic liquid, gel and solid electrolytes. Some such electrolytes may be polymers, and some may not. Gel electrolytes may contain polymers combined with one or more liquid electrolytes. In a gel electrolyte, the polymer(s) may or may not itself be an electrolyte. It should be understood that such organic electrolytes usually contain electrolyte salts, such as lithium salts, even if it is not stated explicitly. There are no particular restrictions on the electrolyte salt that can be used in the organic electrolytes. Any electrolyte salt that includes a lithium ion can be used. It is especially useful to use electrolyte salts that have a large dissociation constant within the organic electrolyte. Examples of such salts include LiPF₆, LiN(CF₃SO₂)₂, LiN(FSO₂)₂, Li(CF₃SO₂)₃C, LiN(SO₂CF₂CF₃)₂, LiB(C₂O₄)₂, and mixtures thereof.

Many embodiments described herein are directed to electrolytes that contain ionically-conductive, solid polymer electrolytes. In various arrangements, the solid polymer electrolyte may be a dry polymer electrolyte, a block copolymer electrolyte and/or a non-aqueous electrolyte. Organic liquid and gel polymer electrolytes can also be used in the embodiments of the invention, either alone as a separator electrolyte in a lithium battery cell or as a component of a composite organic-ceramic electrolyte, according to embodiments of the invention. As is well known in the art, batteries with organic liquid electrolytes may be used with an inactive separator membrane that is distinct from the organic liquid electrolyte.

Electrolytes with a high ionic conductivity, a transference number close to one, and good electrochemical stability at voltages larger than 4.0 V are useful for improving the charge and discharge rate performance of high energy density electrochemical cells. A variety of ceramic electrolytes, including lithium lanthanum titanates (LLTO), lithium lanthanum zirconium oxides (LLZO), and lithium ion conducting glass ceramics such as lithium aluminum titanium phosphate (LATP) and lithium aluminum titanium silicon phosphate (LATSP) have outstanding transport properties and stability at elevated voltages. Such properties are especially useful in a cathode of an electrochemical cell, where enhanced ionic transport may make it possible to use a thicker cathode and thus increase the energy density of the cell.

Unfortunately, ceramic materials are brittle and tend to fracture under the mechanical strain in a cycling electrochemical cell. It would seem that electrolytes composed of a blend of ceramic and polymer electrolytes could mitigate the fracture problem and couple the transport properties of the ceramic with the ease of processing of the polymer. In order for the transport properties of the ceramic to contribute to the performance of the composite film, the interfacial resistance to ionic transport across the ceramic/polymer interface must be very small. But such interfacial resistance has been found to be as much as thousands of Ω·cm², which results in the ceramic electrolyte particles behaving much like an inert filler, offering no ionic conductivity advantage at all. Additionally, ceramic particles tend to agglomerate into larger particles with grain boundaries that can introduce additional ceramic/ceramic interfacial resistance to ionic transport. It is important that such resistances are also low.

A decrease in the interfacial resistance to charge transport is possible across titanium-based or zirconium-based ceramic electrolyte / polymer electrolyte interfaces and across grain boundaries within titanium-based or zirconium-based ceramic electrolyte particles when the titanium-based or zirconium-based ceramic electrolyte material is reduced. Such reduction can occur when the titanium-based or zirconium-based ceramic is reduced from a 4+ oxidation state to a 3+ oxidation state via electrochemical insertion of lithium ions or chemical contact between the titanium-based or zirconium-based ceramic electrolyte and lithium metal. The interfacial resistance between such a reduced titanium-based or zirconium-based ceramic electrolyte and the polymer drops from about 1000 Ω·cm ² to less than 100 Ω·cm² when the ceramic electrolyte is in a more reduced state. Grain boundary resistance within such ceramic electrolytes also drops significantly in reduced states. Unfortunately, titanium-based or zirconium-based ceramic electrolytes oxidize at voltages greater than 1.7 V against Li/Li+. If titanium-based or zirconium-based ceramic electrolytes are to be used in a cathode (*i.e.,* as catholytes), it is important to electronically isolate them from cathode active material to avoid oxidation of the catholyte.

In a reduced state, the titanium-based (Ti³⁺) or zirconium-based (Zn³⁺) ceramic electrolyte has an electronic conductivity of about to 50 S/m. If such an electronically conductive reduced ceramic electrolyte is used in a separator, it can short the cell when it touches both electrodes. Thus, it is important to be sure that such electronically conductive reduced titanium-based or zirconium-based ceramic electrolyte particles are isolated from the electrodes.

In one embodiment of the invention, composites of reduced lithium-ion-conducting titanium-based or zirconium-based ceramic electrolyte and organic electrolyte materials make superior electrolytes for use in lithium batteries. Reduced titanium-based or zirconium-based ceramic electrolyte particles provide high conductivity pathways for lithium-ions, enhancing the conductivity of such a composite organic-ceramic electrolyte as compared to less ionically-conductive organic electrolyte material alone. The organic electrolyte material provides flexibility, binding, and space-filling properties, mitigating the tendency of rigid titanate materials to break or delaminate. Materials and techniques that reduce the resistance to charge transport across the interface between organic electrolytes and titanate electrolytes are disclosed herein.

The majority of the potential drop from cathode active material into catholyte occurs over a length of tens of nanometers. If reduced titanium-based or zirconium-based ceramic electrolyte particles are coated with an electronically-insulating and ionically conductive material to a thickness of tens of nanometers the ceramic electrolyte particles can remain in their reduced state even when used in the catholyte. Examples of suitable electronically-insulating and ionically conductive materials include, but are not limited to, polymers such as poly(pentyl malonate), poly(ethylene glycol), and polycaprolactone, and inorganic materials such as SiO₂ and TiO₂.

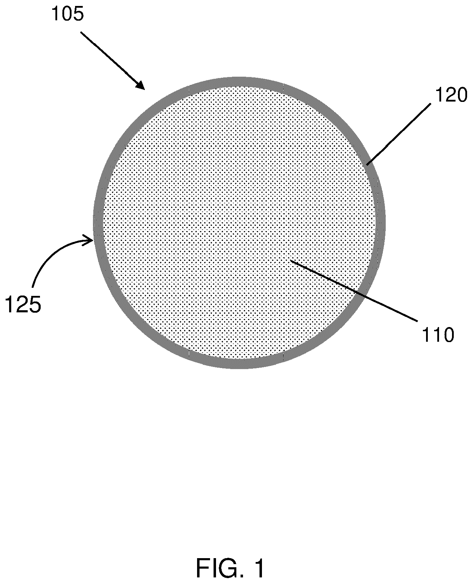

In one embodiment of the invention, a core/shell reduced titanium-based or zirconium-based ceramic electrolyte particle has an outer shell that is electronically-insulating and ionically conducting. Such a coating ensures that such ceramic electrolyte particles in a catholyte are not oxidized by contact with cathode active material and that such ceramic electrolyte particles in a separator electrolyte cannot make electronic contact with both anode and cathode and short a battery cell. Such a core/shell reduced titanium-based or zirconium-based ceramic electrolyte particle 105 is shown in cross section in the schematic drawing in Figure 1. The core/shell reduced titanium-based or zirconium-based ceramic electrolyte particle 105 has a reduced titanium-based or zirconium-based ceramic electrolyte core particle 110 that is both ionically and electronically conductive, and an outer shell 120 that is electronically-insulating and ionically conductive. In various arrangements, the ionic conductivity of the ceramic electrolyte core particle 110 is greater than 1 x 10⁻⁷ S/cm, greater than 1 x 10⁻⁵ S/cm, greater than 1 x 10⁻³ S/cm, or any range subsumed therein at room temperature (30°C). In various arrangements, the electronic conductivity of the outer shell is less than 1 x 10⁻⁶ S/cm, less than 1 x 10⁻⁷ S/cm, less 1 x 10⁻⁸ S/cm, or any range subsumed therein at room temperature (30°C). In various arrangements, the ionic conductivity of the outer shell is greater than 1 x 10⁻⁸ S/cm, greater than 1 x 10⁻⁵ S/cm, greater than 1 x 10⁻³ S/cm, or any range subsumed therein at room temperature (30°C). When such core/shell reduced titanium-based or zirconium-based ceramic electrolyte particles are used in composite organic-ceramic electrolytes, they have been shown to have reduced interfacial resistance as compared with oxidized titanium-based (Ti⁴⁺) or zirconium-based (Zn⁴⁺) electrolyte particles that do have such shells on their outer surfaces.

In various embodiments of the invention, the core/shell reduced titanium-based or zirconium-based ceramic electrolyte particles are approximately spherical or equiaxed and have an average diameter between 10 nm and 100 µm, between 300 nm and 10 µm, between 500 nm and 2 µm, or any range subsumed therein. In various embodiments of the invention, the shell thickness of the core/shell reduced titanium-based or zirconium-based ceramic electrolyte particle is between 1 nm and 50 nm, between 2 nm and 30 nm, between 5 nm and 10 nm, or any range subsumed therein. In one embodiment, the shell is continuous and covers all or nearly all of the surface of the core particle. In other embodiments, the shell is discontinuous and covers between 75% and 50% of the surface of the core particle, between 50% and 25% of the surface of the core particle, or any range subsumed therein.

Examples of titanium-based or zirconium-based ceramic electrolyte materials that can be reduced and used as the core for core/shell particles in the embodiments of the invention include, but are not limited to, materials listed in Table I below. In some embodiments of the invention the core in a core/shell particle has a crystalline morphology, and in some embodiments the core in a core/shell particle has an amorphous or glass morphology.

**Table I**

| Exemplary Titanium-based or Zirconium-based Ceramic Electrolyte Materials | |
|---|---|
| **Electrolyte Type** | **Exemplary Formula(s)** |
| Lithium lanthanum titanates (LLTO) | Li₃ₓLa_{(2/3)-x}TiO₃ |
| Lithium lanthanum zirconium oxides (LLZO) | Li₇La₃Zr₂O₁₂ |
| Lithium aluminum titanium phosphates (LATP) | LiₓTi_{y}Al_{z}(PO₄)₃ (*e.g*., Li_{1.3}Ti_{1.7}Al_{0.3}(PO₄)₃) |
| Lithium aluminum titanium silicon phosphates (LATSP) | Li_{1+x+y}AlₓTi₂₋ₓSi_{y}P_{3-y}O₁₂ |

As shown in Table I above, lithium lanthanum titanate (LLTO) can be described by the formula, Li₃ₓLa_{(2/3)-x}TiO₃. In various arrangements, the values of x are given by 0 < x < 0.7, 0.02 < x < 0.30, 0.04 < x < 0.17, or 0.09 < x < 0.13. Various other titanium-based or zirconium-based ceramic electrolyte materials in Table I are shown as having chemical formulas in which the stoichiometries are shown with variables such as x, y, and z. As would be understood by a person with ordinary skill in the art, each of the compounds listed in Table I may have a variety of stoichiometries. Those shown in Table I are meant to be examples only. It should be understood that the examples in Table I are representative only, and that the invention is not limited by any particular values of the stoichiometric variables.

In some embodiments of the invention, any of the ceramic electrolyte materials listed in Table I also contains one or more of a variety of dopants. A list of exemplary dopants is shown below:

| | | | |
|---|---|---|---|
| sodium | magnesium | aluminum | potassium |
| calcium | chromium | manganese | iron |
| gadolinium | germanium | rubidium | strontium |
| yttrium | zirconium | niobium | ruthenium |
| silver | barium | praseodymium | neodymium |
| samarium | europium | terbium | dysprosium |
| hafnium | tantalum | tungsten | thallium |

In some embodiments of the invention, electronically-insulating polymer or ceramic materials are used as the shells in the core/shell particles disclosed herein. Examples of such electronically-insulating materials include, but are not limited to, materials listed in Table II below. In one embodiment of the invention the shell in a core/shell particle has a crystalline morphology, and in some embodiments the shell in a core/shell particle has an amorphous or glass morphology. In some embodiments of the invention, the electronically-insulating material used in the shells in the core/shell particles disclosed herein is a material that has properties that may also make it useful as a cathode active material.

**Table II**

| Exemplary Electronically-insulating Shell Materials | |
|---|---|
| **Polymers** | **Ceramics** |
| Poly(pentyl malonate) | Silicon oxides |
| Poly(ethylene glycol) | Titanium oxides |
| Polycaprolactone | Aluminum oxides |

Although the schematic drawing in Figure 1 shows a sharp boundary between the reduced titanium-based or zirconium-based ceramic electrolyte core particle 110 and the outer shell 120 of the core/shell ceramic electrolyte particle 105, it should be understood that diffuse boundaries are also possible. In some arrangements, there is a gradient of electronically-insulating material within the outer shell 120. For example, the outermost surface 125 may contain electronically-insulating material that has the lowest (highest) electronic conductivity, and the electronic conductivity increases (decreases) within the outer shell 120 as one gets closer to the reduced titanium-based or zirconium-based ceramic electrolyte core particle 110.

In some embodiments of the invention, the outer shell 120 is applied to the reduced titanium-based or zirconium-based ceramic electrolyte core particle 110 by sputtering an electronically-insulating material. Examples of materials that can be used to coat the particles by sputtering include, but are not limited to, the ceramic materials listed in Table II above.

In some embodiments of the invention, the electronically-insulating outer shell 120 is applied to the reduced titanium-based or zirconium-based ceramic electrolyte core particle 110 using mechanical milling. Through mechanical impaction, the electronically-insulating material is applied and adhered to the surface of the titanium-based or zirconium-based ceramic electrolyte core particle.

In one arrangement, electronically-insulating polymers such those listed in Table II, or combinations thereof are used as the outer shell 120 in the core/shell reduced titanium-based or zirconium-based ceramic electrolyte particle 105 disclosed herein. Such materials may be dissolved in a solvent and applied to core particles by dipping the particles into the solution and evaporating the solvent.

There are other methods that can be used to coat electronically-insulating materials onto reduced titanium-based or zirconium-based ceramic electrolyte particles, m which would be known to a person of ordinary skill in the art.

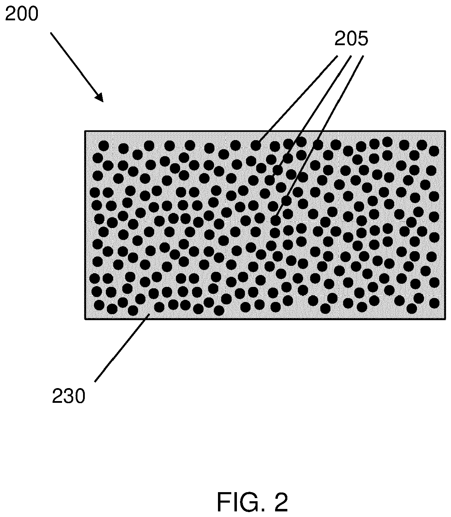

In one embodiment of the invention the core/shell reduced titanium-based or zirconium-based ceramic electrolyte particles disclosed above can be mixed with an organic electrolyte to form a composite organic-ceramic electrolyte that has improved ionic transport properties and electrochemical stability in a battery cell, as compared to the organic electrolyte alone. Such a composite organic-ceramic electrolyte 200 is shown in cross section in the schematic drawing in Figure 2. The composite organic-ceramic electrolyte 200 contains core/shell reduced titanium-based or zirconium-based ceramic electrolyte particles 205, as seen in Figure 1, distributed within a solid, gel, or liquid organic electrolyte 230.

In one embodiment of the invention, the organic electrolyte 230 is any ionically-conductive solid polymer that is appropriate for use in a Li battery. Examples of such solid polymer electrolytes include, but are not limited to, homopolymers, random copolymers, graft copolymers, and block copolymers that contain ionically-conductive blocks and structural blocks that make up ionically-conductive phases and structural phases, respectively. The ionically-conductive polymers or phases may contain one or more linear or non-linear polymers such as polyethers, polyamines, polyimides, polyamides, poly alkyl carbonates, polynitriles, perfluoro polyethers, polysiloxanes, polyalkoxysiloxanes, polyphosphazines, polyolefins, polydienes, polyesters, and fluorocarbon polymers substituted with high dielectric constant groups such as nitriles, carbonates, and sulfones, and combinations thereof. The linear polymers can also be used in combination as graft copolymers with polysiloxanes, polyalkoxysiloxanes, polyphosphazines, polyolefins, and/or polydienes to form the conductive phase. The structural phase may be made of polymers such as polystyrene, hydrogenated polystyrene, polymethacrylate, poly(methyl methacrylate), polyvinylpyridine, polyvinylcyclohexane, polyimide, polyamide, polypropylene, polyolefins, poly(t-butyl vinyl ether), poly(cyclohexyl methacrylate), poly(cyclohexyl vinyl ether), poly(t-butyl vinyl ether), polyethylene, poly(phenylene oxide), poly(2,6-dimethyl-1,4-phenylene oxide) (PXE), poly(phenylene sulfide), poly(phenylene sulfide sulfone), poly(phenylene sulfide ketone), poly(phenylene sulfide amide), polysulfone, fluorocarbons, such as polyvinylidene fluoride, or copolymers that contain styrene, methacrylate, or vinylpyridine. It is especially useful if the structural phase is rigid and is in a glassy or crystalline state. In various arrangements, the polymer electrolyte 230 has a molecular weight greater than 250 Da, or greater than 20,000 Da, or greater than 100,000 Da.

In some embodiments of the invention, the organic electrolyte 230 is any ionically-conductive organic liquid electrolyte that is appropriate for use in a Li battery. In some arrangements, liquid electrolytes that can be used in any of the composite organic-ceramic electrolytes described herein include, but are not limited to, solvents with electrolyte salts, ionic liquids with electrolyte salts, and combinations thereof. In general, organic electrolytes may be used in combination to form electrolyte mixtures. As is well known in the art, batteries with organic liquid electrolytes may be used with an inactive separator membrane that is distinct from the organic liquid electrolyte. Some examples of such solvents and ionic liquids are shown in Table III.

**Table III**

| Exemplary Organic Liquid Electrolytes | | | |
|---|---|---|---|
| Solvents (to which electrolyte salt is added) | | | |
| polyethylene glycol | propylene carbonate (PC) | | succinonitrile |
| dimethyl ether (PEGDME) | dimethylformamide (DMF) | | glutaronitrile |
| diethyl carbonate (DEC) | dimethylcarbonate | | adiponitrile |
| ethylene carbonate (EC) | acetonitrile | | |

| Ionic liquids (to which electrolyte salt is added) | | | |
|---|---|---|---|
| alkyl substituted pyridinium-based ionic liquids | | alkyl substituted ammonium-based ionic liquids | |
| alkyl substituted pryrolidinium-based ionic liquids | | alkyl substituted piperidinium-based ionic liquids | |

There are no particular restrictions on the electrolyte salt that can be used with the solvents and ionic liquids listed in Table III above. Any electrolyte salt that includes a lithium ion can be used. It is especially useful to use electrolyte salts that have a large dissociation constant within the organic electrolyte. Examples of such salts include LiPF₆, LiN(CF₃SO₂)₂ (LiTFSI), Li(CF₃SO₂)₃C, LiN(SO₂CF₂CF₃)₂, LiN(FSO₂)₂, LiN(CN)₂, LiB(CN)₄, LiB(C₂O₄)₂, Li₂B₁₂FₓH₁₂₋ₓ, Li₂B₁₂F₁₂, and mixtures thereof.

Examples of anions that can be included in the ionic liquids listed in Table III above include, but are not limited to, bis(trifluoromethane)sulfonamide (TFSI), fluoralkylphosphate (FAP), tetracyanoborate (TCB), bis(oxalato)borate (BOB), difluoro(oxalato)borate (DFOB), bis(fluorosulfonyl)imide (FSI), PF₆, BF₄ anions and combinations thereof.

In some embodiments of the invention, the organic electrolyte 230 is any ionically-conductive gel electrolyte that is appropriate for use in a Li battery. Examples of gel electrolytes that can be used in any of the composite organic-ceramic electrolytes described herein include, but are not limited to, polymers such as polyethylene oxide (PEO), polyacrylonitrile (PAN), poly(methyl methacrylate) (PMMA), poly(vinylidene fluoride) (PVDF), poly(vinyl pyrrolidinone) (PVP), poly(vinyl acetate) (PVAC), poly(vinylidene fluoride)-co-hexafluoropropylene (PVDF-HFP), and combinations thereof mixed with a liquid electrolyte such as those listed above.

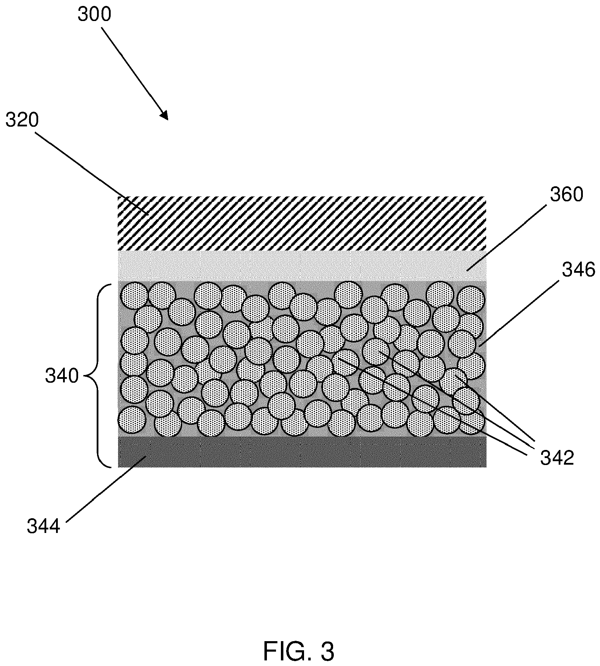

In one embodiment of the invention, the composite organic-ceramic electrolytes described herein are used as catholytes in lithium battery cells. With reference to Figure 3, a lithium battery cell 300 has an anode 320 that is configured to absorb and release lithium ions. The anode 320 may be a lithium or lithium alloy foil or it may be made of a material into which lithium ions can be absorbed and released, such as graphite, silicon, or lithium titanate. The lithium battery cell 300 also has a cathode 340 that includes cathode active material particles 342, an optional electronically-conductive additive (not shown), a current collector 344, a catholyte 346, and an optional binder (not shown). The catholyte 346 may be any of the composite organic-ceramic electrolytes disclosed here. There is a separator region 360 between the anode 320 and the cathode 340. The separator region 360 contains an electrolyte that facilitates movement of lithium ions back and forth between the anode 320 and the cathode 340 as the cell 300 cycles. The separator region 360 may include any electrolyte that is suitable for such use in a lithium battery cell. In one arrangement, the separator region 360 contains a porous plastic separator material that is soaked with a liquid electrolyte. In another arrangement, the separator region 360 contains a liquid (in combination with an inactive separator membrane) or gel electrolyte. In another arrangement, the separator region 360 contains a solid polymer electrolyte. In another arrangement, the separator region 360 contains a ceramic electrolyte or a composite organic-ceramic electrolyte, as disclosed herein.

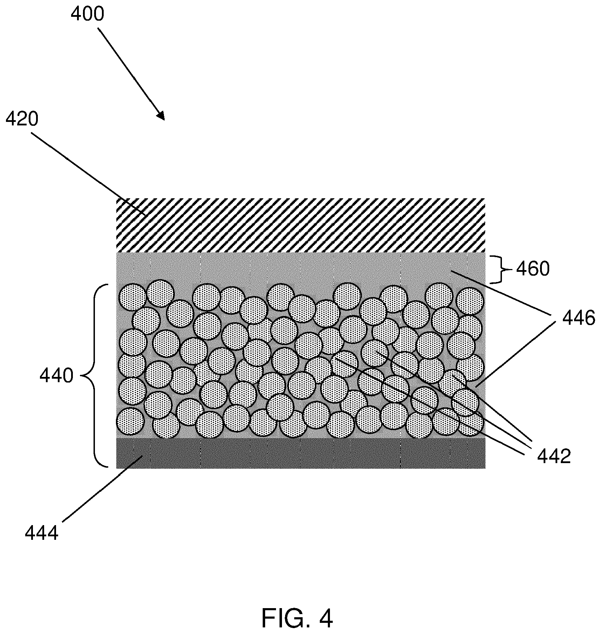

In some embodiments of the invention, a battery cell with a second configuration is described. With reference to Figure 4, a lithium battery cell 400 has an anode 420 that is configured to absorb and release lithium ions. The anode 420 may be made of a material into which lithium ions can be absorbed and released, such as graphite, silicon, or lithium titanate. The lithium battery cell 400 also has a cathode 440 that includes cathode active material particles 442, an optional electronically-conductive additive (not shown), a current collector 444, a catholyte 446, and an optional binder (not shown). The catholyte 446 may be any of the composite organic-ceramic electrolytes disclosed here. There is a separator region 460 between the anode 420 and the cathode 440. The catholyte 446 extends from the cathode 440 into the separator region 460 and facilitates movement of lithium ions back and forth between the anode 420 and the cathode 440 as the cell 400 cycles. In one arrangement, the catholyte 440 is a liquid composite organic-ceramic electrolyte and it is used in combination with an inactive separator membrane (not shown) in the separator region 460.

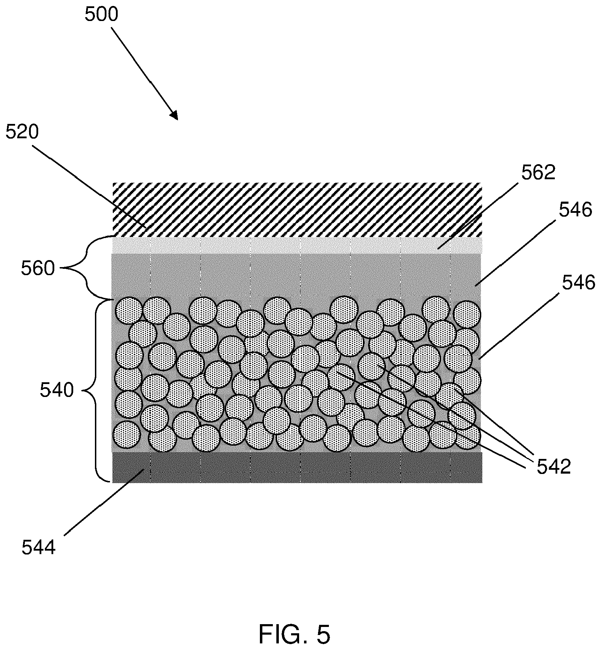

In some embodiments of the invention, a battery cell with a third configuration is described. With reference to Figure 5, a lithium battery cell 500 has an anode 520 that is configured to absorb and release lithium ions. The anode 520 may be a lithium or lithium alloy foil or it may be made of a material into which lithium ions can be absorbed and released, such as graphite, silicon, or lithium titanate. The lithium battery cell 500 also has a cathode 540 that includes cathode active material particles 542, an optional electronically-conductive additive (not shown), a current collector 544, a catholyte 546, and an optional binder (not shown). The catholyte 546 may be any of the composite organic-ceramic electrolytes disclosed here. There is a separator region 560 between the anode 520 and the cathode 540. The catholyte 546 extends into the separator region 560. In one arrangement, the catholyte 546 is a liquid composite organic-ceramic electrolyte and it is used in combination with an inactive separator membrane (not shown) in the separator region 560. The separator region 560 also contains an anode overcoat layer 562 adjacent to the anode 520, which contains an electrolyte that is different from the catholyte 546. The anode overcoat layer 562 may include any other electrolyte that is suitable for such use in a lithium battery cell. In one arrangement, the anode overcoat layer 562 contains an inactive separator membrane (not shown) that is soaked with a liquid electrolyte. In another arrangement, the anode overcoat layer 562 contains a gel electrolyte. In another arrangement, the anode overcoat layer 562 contains a solid polymer electrolyte. In another arrangement, the anode overcoat layer 562 contains no titanate electrolyte particles. The electrolytes in the separator region 560 facilitate movement of lithium ions back and forth between the anode 520 and the cathode 540 as the cell 500 cycles.

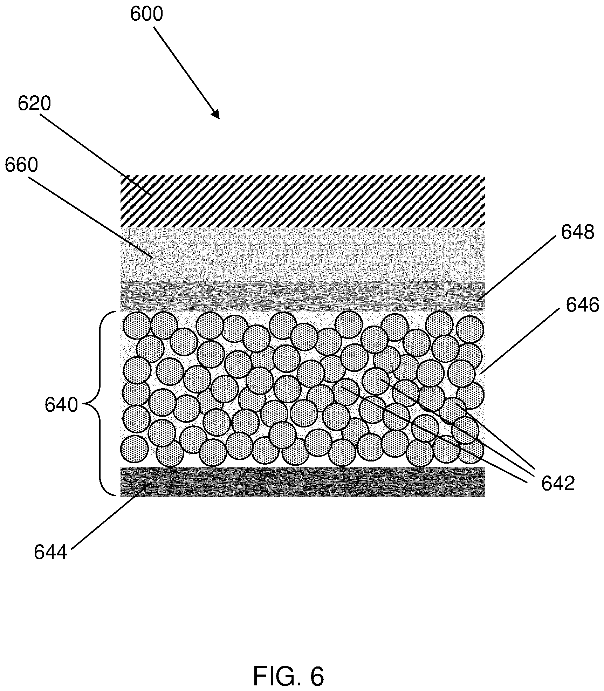

In some embodiments of the invention, a battery cell with a fourth configuration is described. With reference to Figure 6, a lithium battery cell 600 has an anode 620 that is configured to absorb and release lithium ions. The anode 620 may be a lithium or lithium alloy foil or it may be made of a material into which lithium ions can be absorbed and released, such as graphite, silicon, or lithium titanate. The lithium battery cell 600 also has a cathode 640 that includes cathode active material particles 642, an optional electronically-conductive additive (not shown), a current collector 644, a catholyte 646, an optional binder (not shown). There is a cathode overcoat layer 648 between the cathode 640 and a separator region 660. The catholyte 646 may be any of the electrolytes disclosed here, including composite organic-ceramic electrolytes, or any other electrolyte appropriate for use as a catholyte in a lithium battery cell.

With respect to the embodiments discussed in Figures 3, 4, 5, and 6, suitable cathode active materials include, but are not limited to, lithium iron phosphate (LFP), lithium metal phosphate (LMP) in which the metal can be manganese, cobalt, or nickel, lithium nickel cobalt aluminum oxide (NCA), lithium nickel cobalt manganese oxide (NCM), high-energy NCM, lithium manganese spinel, lithium manganese nickel spinel, sulfur, vanadium pentoxide, and combinations thereof. Suitable electronically-conductive additives include, but are not limited to, carbon black, graphite, vapor-grown carbon fiber, graphene, carbon nanotubes, and combinations thereof. A binder can be used to hold together the cathode active material particles and the electronically-conductive additive. Suitable binders include, but are not limited to, PVDF (polyvinylidene difluoride), PVDF-HFP (poly(vinylidene fluoride-co-hexafluoropropylene)), PAN (polyacrylonitrile), PAA (polyacrylic acid), PEO (polyethylene oxide), CMC (carboxymethyl cellulose), SBR (styrene-butadiene rubber), and combinations thereof.

With respect to the embodiments discussed in Figures 3, 4, 5, and 6, solid polymer electrolytes for use in separator regions 360, 460, 560, 660, and as the anode overcoat layer 562 can be any such electrolyte that is appropriate for use in a Li battery. Of course, many such electrolytes also include electrolyte salt(s) that help to provide ionic conductivity. Examples of such solid polymer electrolytes include, but are not limited to, homopolymers, random copolymers, graft copolymers, and block copolymers that contain ionically-conductive blocks and structural blocks that make up ionically-conductive phases and structural phases, respectively. The ionically-conductive polymers or phases may contain one or more linear or non-linear polymers such as polyethers, polyamines, polyimides, polyamides, poly alkyl carbonates, polynitriles, perfluoro polyethers, polysiloxanes, polyalkoxysiloxanes, polyphosphazines, polyolefins, polydienes, polyesters, and fluorocarbon polymers substituted with high dielectric constant groups such as nitriles, carbonates, and sulfones, and combinations thereof. The linear polymers can also be used in combination as graft copolymers with polysiloxanes, polyalkoxysiloxanes, polyphosphazines, polyolefins, and/or polydienes to form the conductive phase. The structural phase may be made of polymers such as polystyrene, hydrogenated polystyrene, polymethacrylate, poly(methyl methacrylate), polyvinylpyridine, polyvinylcyclohexane, polyimide, polyamide, polypropylene, polyolefins, poly(t-butyl vinyl ether), poly(cyclohexyl methacrylate), poly(cyclohexyl vinyl ether), poly(t-butyl vinyl ether), polyethylene, poly(phenylene oxide), poly(2,6-dimethyl-1,4-phenylene oxide) (PXE), poly(phenylene sulfide), poly(phenylene sulfide sulfone), poly(phenylene sulfide ketone), poly(phenylene sulfide amide), polysulfone, fluorocarbons, such as polyvinylidene fluoride, or copolymers that contain styrene, methacrylate, or vinylpyridine. It is especially useful if the structural phase is rigid and is in a glassy or crystalline state. In various arrangements, the polymer electrolyte 230 has a molecular weight greater than 250 Da, greater than 1,000 Da, greater than 5,000 Da, greater than 10,000 Da, greater than 20,000 Da, greater than 100,000 Da, or any range subsumed therein. Further information about such block copolymer electrolytes can be found in US Patent number 9,136,562, issued September 15, 2015, US Patent number 8,889,301, issued November 18, 2014, US Patent number 8,563,168, issued October 22, 2013, and US Patent number 8,268,197, issued September 18, 2012, all of which are included by reference herein.

With respect to the embodiments discussed in Figures 3, 4, 5, and 6, organic liquid electrolytes for use in separator regions 360, 460, 560, 660, and as the anode overcoat layer 562 can be any ionically-conductive liquid electrolyte that is appropriate for use in a Li battery. Examples of liquid electrolytes that can be used in a composite organic-ceramic electrolyte have been listed above with reference to Table III. In general, liquid electrolytes may be used in combination to form electrolyte mixtures. As is well known in the art, batteries with organic liquid electrolytes may be used with an inactive separator membrane that is distinct from the organic liquid electrolyte.

With respect to the embodiments discussed in Figures 3, 4, 5, and 6, organic gel electrolytes for use in separator regions 360, 460, 560, 660, and as the anode overcoat layer 562 can any ionically-conductive gel electrolyte that is appropriate for use in a Li battery. Examples of gel electrolytes that can be used in a composite organic-ceramic electrolyte include, but are not limited to, polymers such as polyethylene oxide (PEO), polyacrylonitrile (PAN), poly(methyl methacrylate) (PMMA), poly(vinylidene fluoride) (PVDF), poly(vinyl pyrrolidinone) (PVP), poly(vinyl acetate) (PVAC), poly(vinylidene fluoride)-co-hexafluoropropylene (PVDF-HFP), and combinations thereof mixed with a liquid electrolyte such as those listed in Table III above.

### Examples

The following example provides details relating to fabrication and performance characteristics of a composite organic-ceramic electrolyte in accordance with the present invention. It should be understood the following is representative only, and that the invention is not limited by the detail set forth in this example.

Lithium symmetric cells were prepared with solid polymer electrolyte/LLTO electrolyte/solid polymer electrolyte stacks between lithium electrodes using two different types of LLTO electrolyte. The LLTO electrolyte in Cell 1 was commercial LLTO. The LLTO electrolyte in Cell 2 was an LLTO that had been chemically reduced by contact with lithium metal. The solid polymer electrolytes were the same and were PEO/PS block copolymer electrolyte with LiTFSI salt.

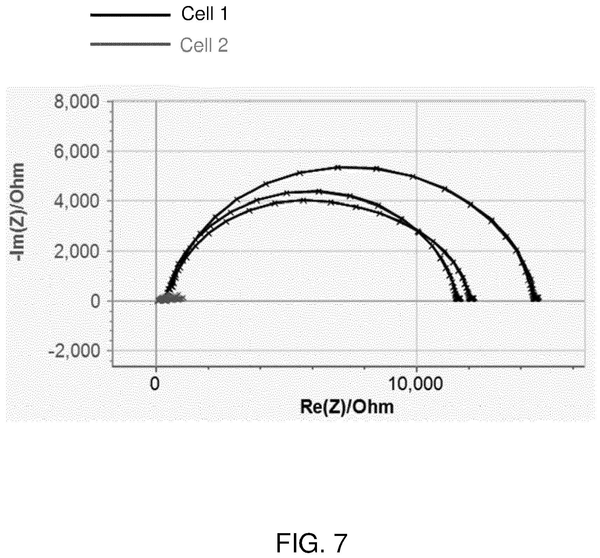

The resistance to ionic charge transport across the interface between the polymer electrolyte and the titanate electrolyte was measured using AC impedance spectroscopy. Figure 7 is Nyquist plot that shows AC impedance spectra for the two lithium symmetric cells. The Nyquist plot shows the negative imaginary portion of the impedance, which is related to capacitance as a function of the real portion of impedance, which is related to resistance. The larger the diameter of the semicircular plot, the larger the resistance to charge transfer through the cell. Cell 1 (shown in black) has the poorest charge transfer, and Cell 2 (shown in grey) had much better charge transfer, indicating that resistance across the interface between the polymer electrolyte and the titanate electrolyte was lower when the titanate electrolyte material had been reduced. The resistance across the cell, even when the electronically conductive, reduced LLTO is electronically insulated from the lithium electrodes by a PEO/PS block copolymer (with LiTFSI salt) membrane, is lowered by about 20x.

This invention has been described herein in considerable detail to provide those skilled in the art with information relevant to apply the novel principles and to construct and use such specialized components as are required. However, it is to be understood that the invention can be carried out by different equipment, materials and devices, and that various modifications, both as to the equipment and operating procedures, can be accomplished without departing from the scope of the invention itself.

## Claims

1. A composite organic-ceramic electrolyte, comprising:
an organic electrolyte; and
core/shell particles dispersed throughout the organic electrolyte;
wherein the core/shell particles comprise:
a core particle comprising an ionically-conductive reduced titanium-based or zirconium-based ceramic electrolyte material; and
an electronically-insulating outer shell around the core particle, the electronically-insulating outer shell having an electronic conductivity less than 1 x 10⁻⁶ S/cm at 30°C;
wherein the titanium-based ceramic electrolyte is in a reduced state Ti³⁺ and the zirconium-based ceramic electrolyte is in a reduced state Zn³⁺.

2. The composite organic-ceramic electrolyte of Claim 1 wherein the ionic conductivity of the reduced titanium-based or zirconium-based ceramic electrolyte is greater than the ionic conductivity of the organic electrolyte.

3. The composite organic-ceramic electrolyte of Claim 1 wherein the reduced titanium-based or zirconium-based ceramic electrolyte is selected from the group consisting of reduced lithium lanthanum titanates (LLTO), reduced lithium lanthanum zirconium oxides (LLZO), reduced lithium aluminum titanium phosphates (LATP), reduced lithium aluminum titanium silicon phosphates (LATSP), and combinations thereof.

4. The composite organic-ceramic electrolyte of Claim 1 wherein the organic electrolyte is selected from the group consisting of solid polymer electrolytes, gel electrolytes, and liquid electrolytes.

5. The composite organic-ceramic electrolyte of Claim 1 wherein the solid polymer electrolyte comprises an electrolyte salt and a polymer selected from the group consisting of polyethers, polyamines, polyimides, polyamides, poly alkyl carbonates, polynitriles, perfluoro polyethers, polysiloxanes, polyalkoxysiloxanes, polyphosphazines, polyolefins, polydienes, polyesters, fluorocarbon polymers substituted with one or more groups selected from the group consisting of nitriles, carbonates, and sulfones, and combinations thereof.

6. The composite organic-ceramic electrolyte of Claim 5 wherein the solid electrolyte has a molecular weight greater than 250 Da.

7. The composite organic-ceramic electrolyte of Claim 1 wherein the liquid electrolyte comprises an electrolyte salt and a liquid selected from the group consisting of polyethylene glycol dimethyl ether, diethyl carbonate, ethylene carbonate, propylene carbonate, dimethylformamide, dimethylcarbonate, acetonitrile, succinonitrile, glutaronitrile, adiponitrile, alkyl substituted pyridinium-based ionic liquids, alkyl substituted pryrolidinium-based ionic liquids, alkyl substituted ammonium-based ionic liquids, alkyl substituted piperidinium-based ionic liquids, and combinations thereof.

8. The composite organic-ceramic electrolyte of Claim 1 wherein the core/shell particles are approximately spherical and have average diameters between 10 nm and 100 µm.

9. The composite organic-ceramic electrolyte of Claim 1 wherein the electronically-insulating outer shell is an electronically-insulating polymer or an electronically-insulating ceramic.

10. The composite organic-ceramic electrolyte of Claim 1 wherein the electronically-insulating outer shell comprises an electronically-insulating polymer selected from the group consisting of poly(pentyl malonate), poly(ethylene glycol), polycaprolactone, and combinations thereof.

11. The composite organic-ceramic electrolyte of Claim 1 wherein the electronically-insulating outer shell comprises an electronically-insulating ceramic selected from the group consisting of silicon oxides, titanium oxides, aluminum oxides, and combinations thereof.

12. A composite organic-ceramic electrolyte, comprising:
an organic electrolyte; and
core/shell particles dispersed throughout the organic electrolyte;
wherein the core/shell particles comprise:
a reduced (Li⁺³) lithium lanthanum titanate core; and
a poly(pentyl malonate) shell around the core.

13. A cathode comprising:
cathode active material particles, an electronically-conductive additive, a catholyte, and an optional binder material; and
a current collector adjacent to an outside surface of the cathode;
wherein the catholyte comprises a composite organic-ceramic electrolyte according to Claim 1.

14. The cathode of Claim 13 wherein the cathode active material particles comprise a material selected from the group consisting of lithium iron phosphate, lithium manganese phosphate, lithium cobalt phosphate, lithium nickel phosphate, lithium nickel cobalt aluminum oxide, lithium nickel cobalt manganese oxide, high-energy lithium nickel cobalt manganese oxide, lithium manganese spinel, lithium manganese nickel spinel, sulfur, vanadium pentoxide, and combinations thereof.

15. An electrochemical cell, comprising:
an anode configured to absorb and release lithium ions;
a cathode comprising cathode active material particles, an electronically-conductive additive, a catholyte, and an optional binder material;
a current collector adjacent to an outside surface of the cathode; and
a separator region between the anode and the cathode, the separator region comprising a separator electrolyte configured to facilitate movement of lithium ions back and forth between the anode and the cathode;
wherein the catholyte comprises a composite organic-ceramic electrolyte according to Claim 1.

16. The electrochemical cell of Claim 15 wherein the anode comprises graphite, silicon or lithium titanate, and the separator electrolyte comprises a composite organic-ceramic electrolyte according to Claim 1.

17. The electrochemical cell of Claim 15 wherein the anode comprises lithium or lithium alloy foil, the separator electrolyte comprises a composite organic-ceramic electrolyte according to Claim 1, and further comprising an anode overcoat layer adjacent to the anode, wherein the anode overcoat layer comprises an electrolyte that contains no core/shell titanate electrolyte particles.

18. The electrochemical cell of Claim 15 wherein the separator electrolyte comprises a composite organic-ceramic electrolyte according to Claim 1.

19. The electrochemical cell of Claim 18 wherein the catholyte and the separator electrolyte are the same.
